# EUROPEAN PATENT SPECIFICATION

(11) **EP 1 942 539 B1**
(45) Date of publication and mention of the grant of the patent: **17.03.2010**
(21) Application number: 06125622.8
(22) Date of filing: 07.12.2006
(51) Int. Cl.: H01M 8/02, B21D 53/36

(54) **Flanges for the separator plate of molten carbonate fuel cells**
Flansche für die Separatorplatte von Schmelzkarbonatbrennstoffzellen
Brides pour la plaque de séparation de piles à combustible en carbonate fondu

(43) Date of publication of application: 09.07.2008
(73) Proprietor: Ansaldo Fuel Cells S.p.A., 16152 Genova (IT)
(72) Inventor: Durante, Gianluigi, 16158, Genova (IT); Vegni, Sandro, 16142, Genova (IT); Capobianco, Paolo, 16154, Genova (IT)
(74) Representative: Di Sciuva, Michele

(56) References cited:
- WO-A-2006/111990
- JP-A- 1 115 066
- JP-A- 61 161 665
- JP-A- 64 000 654
- US-A- 4 514 475
- US-A- 5 565 167
- MATSUYAMA H ET AL: "CORROSION STUDIES OF FE-BASED CR ALLOYS CONTAINING AL IN MOLTEN CARBONATES" EXTENDED ABSTRACTS, ELECTROCHEMICAL SOCIETY. PRINCETON, NEW JERSEY, US, vol. 93/1, 16 May 1993 (1993-05-16), page 2021, XP000421911 ISSN: 0160-4619

## Description

### Field of the invention

The present invention relates to a detachable flange comprising a particular composition to the separator plate of molten carbonate fuel cells (MCFC) and to a method for production of the same, such as to permit optimal resistance to oxidisation and corrosion, and at the same time optimal electrical resistance.

### State of the art

A molten carbonate fuel cell consists of an anode and a cathode which enclose the matrix impregnated by carbonates in a liquid state. The anodic and cathodic current collectors are positioned outside the anode and the cathode respectively. The assembly is enclosed by separator plates and constitutes the basic fuel cell.

Stainless steel is currently used as the standard material for the separator plate. The above-mentioned flanges, which constitute the edge areas of said plate, must withstand physical and chemical deterioration as they are in contact with the matrix impregnated with carbonates in the presence of an anodic and cathodic environment.

The steel of the flanges is not resistant to the molten carbonate corrosion because the atmosphere present is not such as to ensure the formation of a surface film of passive oxide able to protect the steel from attack by corrosion.

The current solution is to provide for surface treatment of the separator plate to aluminise the lateral flanges, as this ensures the formation of a layer of protective oxide which is insulating - also electronically - and able to protect against corrosion that can occur in the environment in question.

The central area of the plate, on the other hand, must be electrically conductive and is less subject to corrosion as it is not in direct contact with the molten salts, and is only attacked owing to creeping of the film of electrolyte and by the vapours.

In the production phase, it is therefore necessary to provide the aluminium coating only on the folds of the edges. The method, very complex and costly, produces screening of the central area and then depositing aluminium on the edges of the separator plate by means of a slurry technique. This is followed by the phase of fixing the deposit to prevent detachment.

The document US2003/0063994 presents separator plates for solid oxide fuel cells in which, in order to increase resistance to corrosion of the ferritic steels, new Fe-Cr based alloyed steels have been developed with one or more elements selected from the group consisting of yttrium, REM (Rare Earth Metal) and Zr, maintaining the quantity of aluminium below 1%, and further alloying them with Si and Mn in small quantities.

The patent US6294131 describes Cr steels for current collectors in SOFC fuel cells containing C, Si, Mn, Ni and Al<0.06% with the addition of REM in particular Sc and Y in a percentage of between 0.01 and 0.25.

Furthermore, the publication WO01/13450 defines a separator plate resistant to corrosion in the operating conditions of an MCFC, consisting of a steel Cr 18-25%, Al 4-11% (preferably 6%).

The patent US6090228 describes an anti-corrosion surface treatment of the MCFC separator plate in which the said plate is first covered by means of the slurry technique with a layer of aluminium and then heat treated for several hours in order to produce a reaction of the base material with the aluminium, thus forming a diffusion layer.

In each of the preceding cases, the protective surface treatment of the separator plate inclusive of the lateral flanges, in addition to being complex and costly, limits the choice of the material with the best resistance to attack of the molten carbonates.

WO 2006/111990 relates to a molten carbonate fuel cell MCFC which comprises a separator plate comprising a separator sheet and flanges suitable to be fixed to the separator sheet.
The material of the flange preferably is stainless steel.

Matsuyama et al. disclose in "CORROSION STUDIES OF FE-BASED CR ALLOYS CONTAINING AL IN MOLTEN CARBONATES" EXTENDED ABSTRACTS, ELECTROCHEMICAL SOCIETY. PRINCETON, NEW JERSEY, US, vol. 93/1, 16 May 1993 (1993-05-16); page 2021, an Fe-based steel comprising 20 wt. % Cr and 5 wt. % Al which is resistant to corrosion. It is taught that the anti-corrosion properties are improved with increased A1 contents.

From JP 64 000654 and JP 01 115066 it is known that heat treatment of an Al-containing steel results in the formation of an aluminum oxide layer at the surface of the steel which increases the resistance toward the molten carbonate.

The most recent of the solutions adopted in an attempt to optimise resistance of the peripheral flanges to corrosion involves the use of flanges obtained from the forming of sheet steel coated, by means of the slurry technique, with paint containing aluminium. After the deposition of the Al coating, the flanges obtained undergo slurry consolidation treatment at 300-400°C and a thermal diffusion cycle at 800-1000°C. The heat treatment for this type of fixing involves soaking operations at different temperatures during the increase from ambient T to approximately T = 1000°C; furthermore, the said temperature must be maintained for approximately 10 minutes. The entire treatment must be performed in a vacuum or at lower atmospheric pressure.

From the metallographic analyses performed on the samples of AISI310S/aluminised slurry, the following conclusions can be drawn:
1) The analyses of the surfaces highlight good behaviour of the coating up to 3000 working hours in both an anodic and cathodic environment. The analyses performed on the section also confirm this aspect, without showing any deterioration of the morphology of the layer.
2) After 9000 hours of corrosion, different behaviour is observed in the anodic and cathodic environments.
   Cathodic environment: the coating appears fairly even in thickness but has numerous cracks, although the latter do not reach the interdiffusion area; the material therefore remains protected against corrosion.
   Anodic environment: the test piece is corroded in depth; in many areas the coating is completely worn through and in the areas where it is still present, it is very thin.
3) After 12000 hours, an in-depth corroded test piece with almost completely worn through coating is also observed in the cathodic environment.

In the light of the above results, it is deduced that the solution currently used is not adequate for the long operating times scheduled, up to 40000 hours, and furthermore the separator plate treatment process is very long and complex.

### Scope of the invention

In the light of the problems listed above, it is therefore the main aim of the present invention to provide flanges for the separator plates of fuel cells such as to guarantee optimal resistance to oxidisation and corrosion and also high electrical resistance.

A further aim of the present invention is to devise a method for the production of said flanges such as to simplify the separator plate manufacturing process, where the flanges and the flat central area must necessarily undergo different treatment.

### Description of the invention

The solution is presented using single flanges which can be attached to the separator plates which thus consist of two separate components of different materials mechanically connected to ensure the seal. The flat central part, only in contact with the fuel on the anodic side or with the oxidant on the cathodic side and with the current collectors, is stainless steel, e.g. AISI310S, while the part on the edges consisting of the flanges according to the present invention can be made of a different material able to resist both the corrosive action of the molten carbonates and form a surface layer impermeable to the electron flow.

The said solution corresponds to the flanges according to the subject of claim 1, a separator plate according to claim 5 and the related production method according to claim 8. The dependent claims offer further production advantages.

The invention will be described below in further detail with the help of the figures.

The solution proposed is to produce the flanges of the separator plates (wet-seal area) in stainless steel by means of thermal oxidation treatment. The sheet steel seal edge is therefore obtained in chromium ferritic steel containing aluminium and alloyed with yttrium and hafnium. The chemical composition of the steel is Ni 0.30%, Cr 19.0-21.0%, C < 0.5%, Mn 0.5%, Al 5.5-6.0%, Zr 0.07%, Y 0.1%, Hf 0.1 %, N 0.01%, Fe the remaining amount.

Owing to the unsuitability of the stainless steel in terms of resistance to corrosion and high temperature for prolonged periods in the presence of molten salts in both an anodic and cathodic environment, before using the material a surface layer of aluminium oxide was created, with good resistance to corrosion and adequate electrical resistance properties, by means of suitable thermal oxidation treatment performed at a temperature between 850 and 1000°C for a period of between 1 and 2 hours in air at atmospheric pressure. The selected temperature is preferably 950°C and the optimal treatment time is 1.5 hours. The resulting layer of oxide is between 5 and 15µm thick.

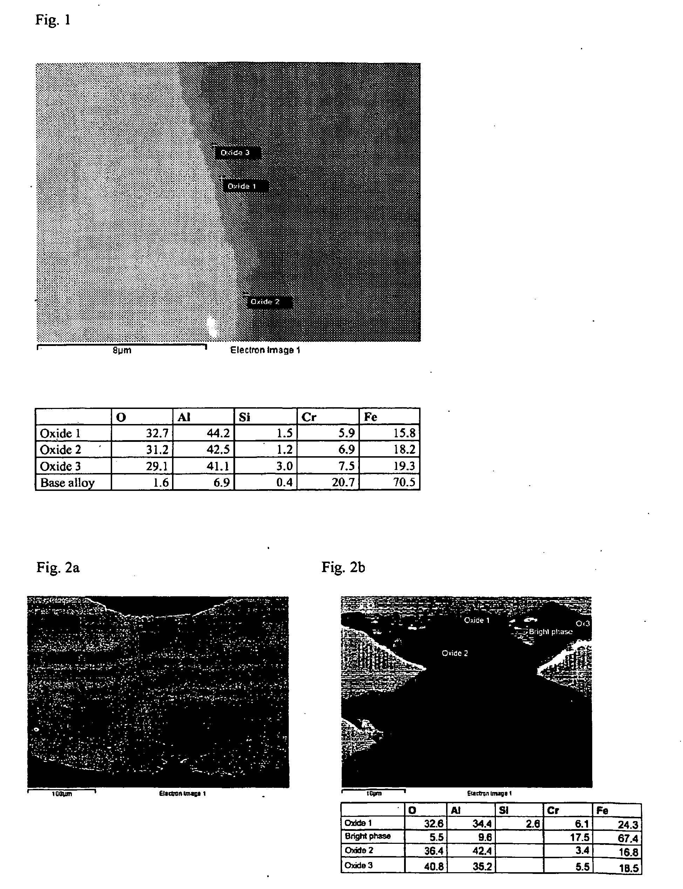

The result of this treatment is shown in fig. 1. The analyses of a test piece after oxidation have highlighted the presence of a layer of oxide of limited thickness but very adherent and uniform in every area of the sample. The layer of surface oxide furthermore consists mainly of alumina.

Furthermore, figures 2a and 2b show that the oxide deposits evenly also inside surface imperfections in the flanges.

The oxidised test pieces were subjected to corrosion in an anodic and cathodic environment. The results are summarised below.

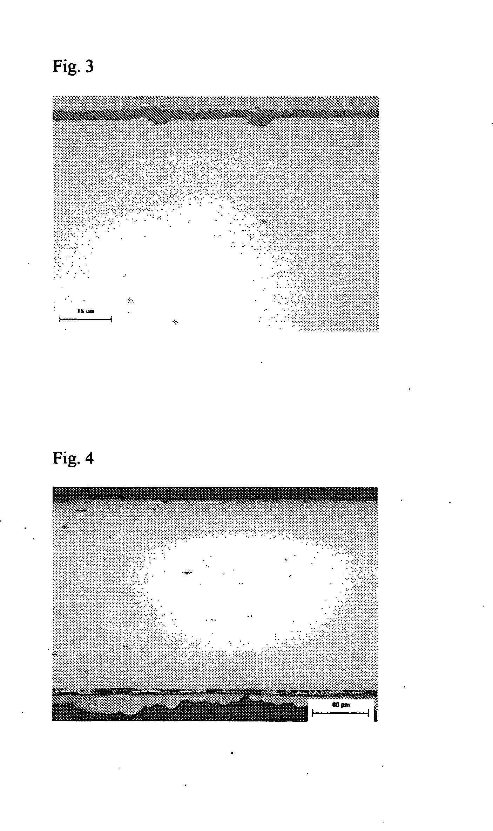

Anodic environment: after 3000 hours of corrosion, the test piece has a very regular section with a very thin, regular, compact and adherent oxide (Fig. 3).
Cathodic environment: after 1000 hours and 6000 hours of corrosion, the test piece has a very regular section; the oxide formed is thin, compact and adherent and there are no signs of deterioration of the surface oxide and base material (Fig. 4).

The material treated as described above also has high electrical resistance values (R > 3 KOhm), a necessary condition for the fin of the wet-seal area.

The wet-seal flanges according to the present invention, since they are removable from the separator plate, have the advantages of simplifying the production cycle with respect to those currently used and of possessing resistance to corrosion in operating conditions also for long periods of time exceeding those of the state of the art, in addition to costing less than the individual component.

## Claims

1. Detachable flanges made of stainless steel for the wet-seal peripheral area of a separator plate for fuel cells, **characterised in that** the flanges can be attached to the separator plates and are removable from the separator plate; and **in that** the flanges have a surface layer of aluminium oxide and a composition comprising Ni 0.30%, Cr 19.0-21.0%, C < 0.5%, Mn 0.5%, Al 5.5-6.0%, Zr 0.07%, Y 0.1%, Hf 0.1 %, N 0.01%, Fe the remaining amount.

2. Detachable flanges as claimed in claim 1, having a thickness of between 0.2 and 0.5 mm and folded so as to present a right-hand fold, a left-hand fold and a central fold with which they attach to the separator plate.

3. Detachable flanges as claimed in claim 2, wherein the flanges are made of sheet steel having a thickness of 0.3 mm.

4. Detachable flanges as claimed in one of the preceding claims, wherein the surface layer of aluminium oxide Al2O3 is evenly distributed over the entire fin and has a thickness of between 5 and 15 µm.

5. Separator plate for fuel cells, comprising flanges made of stainless steel in the wet-seal peripheral area, **characterized in that** the flanges are detachable flanges as claimed in one of the preceding claims, and wherein the flanges can be attached to the separator plates and are removable from the separator plate.

6. Method for the production of stainless steel flanges as claimed in claim 1, wherein said flanges undergo thermal oxidation treatment **characterised by** exposure to the air for a period of between 1 and 2 hours at a temperature of between 850 and 1000 deg. C.

7. Method as claimed in claim 6, wherein the oxidation time is 1.5 hours and the temperature is 950 deg. C in air at atmospheric pressure.

8. Method as claimed in one of the claims 6 or 7, wherein the layer of oxide thus produced is evenly distributed over the entire surface of the flanges and has a thickness of between 5 and 15 µm.

## Patentansprüche

1. Lösbare Flansche aus Edelstahl für den Nassabdichtungs-Umfangsbereich einer Separatorplatte für Brennstoffzellen, **dadurch gekennzeichnet, dass** die Flansche an den Separatorplatten angebracht und von der Separatorplatte gelöst werden können, und **dadurch**, dass die Flansche eine Oberflächenschicht aus Aluminiumoxid und eine Zusammensetzung haben, die Ni 30%, Cr 19,0-21,0%, C< 0,5%, Mn 0,5%, Al 5,5-6,0%, Zr 0,07%, Y 0,1%, Hf 0,1%, N 0,01% und Fe als Restmenge enthält.

2. Lösbare Flansche nach Anspruch 1, die eine Dicke zwischen 0,2 und 0,5 mm haben und derart gekantet sind, dass sie eine rechte Kantung, eine linke Kantung und eine zentrale Kantung aufweisen, mit der sie an der Separatorplatte angebracht sind.

3. Lösbare Flansche nach Anspruch 2, wobei die Flansche aus einem Stahlblech bestehen, das eine Dicke von 0,3 mm hat.

4. Lösbare Flansche nach einem der vorhergehenden Ansprüche, bei denen die Oberflächenschicht aus Aluminiumoxid Al2O3 gleichmäßig über den gesamten Flügel verteilt ist und eine Dicke zwischen 5 und 15 µm hat.

5. Separatorplatte für Brennstoffzellen, enthaltend Flansche aus Edelstahl im Nassabdichtungs-Umfangsbereich, **dadurch gekennzeichnet, dass** die Flansche lösbare Flansche nach einem der vorhergehenden Ansprüche sind und die Flansche an den Separatorplatten angebracht und von der Separatorplatte gelöst werden können.

6. Verfahren zum Herstellen von Edelstahlflanschen nach Anspruch 1, bei dem die Flansche einer thermischen Oxidationsbehandlung unterzogen werden, die sich **dadurch** auszeichnet, dass sie der Luft für einen Zeitraum zwischen ein und zwei Stunden bei einer Temperatur zwischen 850 und 1.000 °C ausgesetzt werden.

7. Verfahren nach Anspruch 6, bei dem die Oxidationszeit 1,5 Stunden beträgt und die Temperatur 950 °C in Luft bei Atmosphärendruck ist.

8. Verfahren nach einem der Ansprüche 6 oder 7, bei dem die auf diese Weise erzeugte Oxidschicht gleichmäßig über die gesamte Oberfläche der Flansche verteilt ist und eine Dicke zwischen 5 und 15 µm hat.

## Revendications

1. Brides amovibles en acier inoxydable pour la surface périphérique de joint aux liquides (« wet-seal area ») d'une plaque de séparation pour piles à combustible, **caractérisées en ce que** les brides peuvent être fixées aux plaques de séparation et peuvent être séparées de la plaque de séparation ; et **en ce que** les brides ont une couche superficielle en oxyde d'aluminium et une composition comprenant 0,30 % de Ni, 19, 0 à 21,0 % de Cr, < 0,5 % de C, 0,5 % de Mn, 5,5 à 6, 0 % d' Al, 0,07 % de Zr, 0, 1 % de Y, 0, 1 % de Hf, 0,01 % de N et le reste, de Fe.

2. Brides amovibles telles que revendiquées dans la revendication 1, ayant une épaisseur comprise entre 0,2 et 0,5 mm et pliées de façon à présenter un pli à droite, un pli à gauche et un pli au centre avec lesquels elles se fixent à la plaque de séparation.

3. Brides amovibles telles que revendiquées dans la revendication 2, dans lesquelles les brides sont en acier inoxydable d'une épaisseur de 0,3 mm.

4. Brides amovibles telles que revendiquées dans l'une des revendications précédentes, dans lesquelles la couche superficielle en oxyde d'aluminium Al₂O₃ est uniformément répartie sur toute l'arête et présente une épaisseur comprise entre 5 et 15 µm.

5. Plaque de séparation pour piles à combustible, comprenant des brides en acier inoxydable dans la surface périphérique de joint aux liquides (« wet-seal area »), **caractérisée en ce que** les brides sont des brides amovibles telles que revendiquées dans l'une des revendications précédentes, et dans laquelle les brides peuvent être fixées aux plaques de séparation et peuvent être séparées de la plaque de séparation.

6. Procédé de préparation de brides en acier inoxydable telles que revendiquées dans la revendication 1, dans lequel lesdites brides subissent un traitement d'oxydation thermique **caractérisé par** une exposition à l'air pendant une durée comprise entre 1 et 2 heures à une température comprise entre 850 et 1 000 degrés C.

7. Procédé tel que revendiqué dans la revendication 6, dans lequel la durée d'oxydation est de 1,5 heures et la température est de 950 degrés C dans de l'air à pression atmosphérique.

8. Procédé tel que revendiqué dans l'une des revendications 6 ou 7, dans lequel la couche d'oxyde ainsi produite est uniformément répartie sur toute la surface des brides et présente une épaisseur comprise entre 5 et 15 µm.
